(19) Europäisches Patentamt / European Patent Office / Office européen des brevets

(11) **EP 4 383 866 A1**

(12) **EUROPEAN PATENT APPLICATION**
published in accordance with Art. 153(4) EPC

(43) Date of publication:
**12.06.2024 Bulletin 2024/24**

(21) Application number: **22852237.1**

(22) Date of filing: **03.08.2022**

(51) International Patent Classification (IPC):
**H04W 68/00** (2009.01)

(52) Cooperative Patent Classification (CPC):
**H04W 68/00;** Y02D 30/70

(86) International application number:
**PCT/CN2022/109974**

(87) International publication number:
**WO 2023/011525 (09.02.2023 Gazette 2023/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.08.2021 CN 202110901354**

(71) Applicant: **Datang Mobile Communications Equipment Co., Ltd.**
**Beijing 100085 (CN)**

(72) Inventors:
• **SU, Yuwan**
 **Beijing 100085 (CN)**
• **WANG, Jiaqing**
 **Beijing 100085 (CN)**
• **YANG, Meiying**
 **Beijing 100085 (CN)**
• **CHENG, Fangchen**
 **Beijing 100085 (CN)**

(74) Representative: **Maiwald GmbH**
**Engineering**
**Elisenhof**
**Elisenstrasse 3**
**80335 München (DE)**

(54) **PAGING PROCESSING METHOD AND APPARATUS**

(57) A paging processing method and an apparatus are provided to solve the problem of power consumption waste in the solution of UE monitoring PO in related aft. The method includes: determining, by a terminal device, a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer; according to a sub-group number corresponding to the terminal device, determining a first bit corresponding to the terminal device in the first information field, where the first bit is configured to indicate a paging status of the terminal device.

determining, by a terminal device, a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer — 201

according to a sub-group number corresponding to the terminal device, determining a first bit corresponding to the terminal device in the first information field, where the first bit is configured to indicate a paging status of the terminal device — 202

Fig.2

**Description**

**CROSS REFERENCE OF RELATED APPLICATION**

The present disclosure claims a priority of Chinese patent disclosure No. 202110901354.3 filed on August 6, 2021, which is incorporated herein by reference in its entirety.

**TECHNICAL FIELD**

The present disclosure relates to the field of communication technology, and in particular, to a paging processing method and an apparatus.

**BACKGROUND**

In the related art, there are many User Equipments (UEs) monitoring the paging physical downlink control channel (paging PDCCH) on the same Paging Occasion (PO). When a UE in the PO is paging, the base station needs to send a Paging Early Indication (PEI). The PEI is configured to indicate that paging PDCCH exists on the PO. At this time, all UEs monitoring the PO will receive the paging PDCCH and paging physical downlink shared channel (PDSCH). For those UEs that is not paged, only after receiving the paging PDCCH and paging PDSCH it can be determined that no paging has entered the low power consumption or sleep state, so there is a waste of power consumption.

**SUMMARY**

This disclosure is to provide a paging processing method and an apparatus to solve the problem of power consumption waste in the solution of UE monitoring PO in related art.
In order to achieve the above objectives, the present disclosure provides a paging processing method, including:
determining, by a terminal device, a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;
according to a sub-group number corresponding to the terminal device, determining a first bit corresponding to the terminal device in the first information field, where the first bit is configured to indicate a paging status of the terminal device.
Optionally, prior to the determining by a terminal device the first information field corresponding to the terminal device in first DCI according to the first paging occasion number, the method further includes:
determining the first paging occasion number according to paging parameters;
where the paging parameters include at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.
Optionally, the first paging occasion number satisfies the following formula:

$$PO\_Index = ( SFN\_PF * N * Ns / T + i\_s ) \bmod N1;$$

where PO_Index represents the first paging occasion number, SFN_PF represents the SFN of the paging frame corresponding to the paging occasion, N represents the quantity of paging frames in the DRX cycle, and Ns represents the quantity of paging occasions in the paging frame, T represents the length of the DRX cycle, and i_s represents the index of the paging occasion in the paging frame.
Optionally, each information field corresponds to one paging occasion, and the first information field includes G1 information bits, and each information bit corresponds to one sub-group.
Optionally, the first information field further includes X1 indication bits, the X1 indication bits are configured to indicate relevant information of the paging occasion, and X1 is a positive integer.
Optionally, the method further includes:
determining a start positon of the first information field, according to at least one of the first paging occasion number, the G1 or the X1.

Optionally, the start position of the first information field satisfies the following formula:

$$\text{Location\_start1} = \text{PO\_index} * (G1 + X1),$$

or,

$$\text{Location\_start1} = \text{PO\_index} * (G1 + X1) + 1;$$

where Location_start1 represents the start position of the first information field, and PO_index represents the first paging occasion number.

Optionally, the first DCI further includes an indication field configured to indicate relevant information of the paging occasion.

Optionally, the relevant information of the paging occasion includes one or more of the following:

an availability of a Tracking Reference Signal (TRS);
whether an Earthquake and Tsunami Warning System (ETWS) sends notification information;
whether to send a system message update indication; or
indication information of a beam of a TRS.

Optionally, the indication field is located subsequent to the N1 information fields.

Optionally, the method further includes:
determining a start positon of the first information field, according to at least one of the first paging occasion number or the G1.

Optionally, the start position of the first information field satisfies the following formula:

$$\text{Location\_start 1} = \text{PO\_index} * G1, \text{ or, Location\_start1} = \text{PO\_index} * G1 + 1;$$

where Location_start 1 represents the start position of the first information field, and PO_index represents the first paging occasion number.

Optionally, the method further includes:
determining a start position of the indication field based on at least one of the N1 or the G1.

Optionally, the start position of the indication field satisfies the following formula:

$$\text{Location\_start2} = \text{N1} * G1, \text{ or Location\_start2} = \text{N1} * G1 + 1;$$

where Location_start2 indicates the start position of the indication field.

Optionally, the indication field is located prior to the N1 information fields.

Optionally, the method further includes:
determining a start position of the first information field based on at least one of the first paging occasion number, the G1 or the X1.

Optionally, the start position of the first information field satisfies the following formula:

$$\text{Location\_start1} = \text{PO\_index} * G1 + X1;$$

or,

$$\text{Location\_start1} = \text{PO\_index} * G1 + X1 + 1;$$

where Location_start1 represents the start position of the first information field, and PO_index represents the first paging occasion number.

Optionally, the start position of the indication field is a first bit of the first DCI.

A paging processing method is further provided in an embodiment of the present disclosure, including:

determining, by a network device, a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;

according to a sub-group number corresponding to the terminal device, determining, by the network device, a first bit corresponding to the terminal device in the first information field, where the first bit is configured to indicate a paging status of the terminal device.

Optionally, prior to the determining by the network device the first information field corresponding to the terminal device in first DCI according to the first paging occasion number, the method further includes:

determining the first paging occasion number according to paging parameters;

where the paging parameters include at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

Optionally, the first paging occasion number satisfies the following formula:

$$PO\_Index= ( SFN\_PF*N*Ns/T+i\_s ) \bmod N1;$$

where PO_Index represents the first paging occasion number, SFN_PF represents the SFN of the paging frame corresponding to the paging occasion, N represents the quantity of paging frames in the DRX cycle, and Ns represents the quantity of paging occasions in the paging frame, T represents the length of the DRX cycle, and i_s represents the index of the paging occasion in the paging frame.

Optionally, each information field corresponds to one paging occasion, and the first information field includes G1 information bits, and each information bit corresponds to one sub-group.

Optionally, the first information field further includes X1 indication bits, the X1 indication bits are configured to indicate relevant information of the paging occasion, and X1 is a positive integer.

Optionally, the method further includes:

determining a start positon of the first information field, according to at least one of the first paging occasion number, the G1 or the X1.

Optionally, the start position of the first information field satisfies the following formula:

$$Location\_start1=PO\_index*(G1+X1),$$

or,

$$Location\_start1= PO\_index*(G1+X1)+1;$$

where Location_start1 represents the start position of the first information field, and PO_index represents the first paging occasion number.

Optionally, the first DCI further includes an indication field configured to indicate relevant information of the paging occasion.

Optionally, the relevant information of the paging occasion includes one or more of the following:

an availability of a Tracking Reference Signal (TRS);
whether an Earthquake and Tsunami Warning System (ETWS) sends notification information;
whether to send a system message update indication; or
indication information of a beam of a TRS.

Optionally, the indication field is located subsequent to the N1 information fields.

Optionally, the method further includes:
determining a start positon of the first information field, according to at least one of the first paging occasion number or the G1.

Optionally, the start position of the first information field satisfies the following formula:

$$Location\_start\ 1 = PO\_index*G1,\ or,\ Location\_start1 = PO\_index*G1+1;$$

where Location_start 1 represents the start position of the first information field, and PO_index represents the first paging occasion number.

Optionally, the method further includes:
determining a start position of the indication field based on at least one of the N1 or the G1.

Optionally, the start position of the indication field satisfies the following formula:

$$Location\_start2 = N1*G1,\ or\ Location\_start2 = N1*G1+1;$$

where Location_start2 indicates the start position of the indication field.

Optionally, the indication field is located prior to the N1 information fields.

Optionally, the method further includes:
determining a start position of the first information field based on at least one of the first paging occasion number, the G1 or the X1.

Optionally, the start position of the first information field satisfies the following formula:

$$Location\_start1 = PO\_index*G1+X1;$$

or,

$$Location\_start1 = PO\_index*G1+X1+1;$$

where Location_start1 represents the start position of the first information field, and PO_index represents the first paging occasion number..

Optionally, the start position of the indication field is a first bit of the first DCI.

A paging processing apparatus is further provided in an embodiment of the present disclosure, applied to a terminal device, including a storage, a transceiver, and a processor;

the storage is configured to store computer programs; the transceiver is configured to send and receive data under a control of the processor; the processor is configured to read the computer program in the memory to perform:
determining a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;
according to a sub-group number corresponding to the terminal device, determining a first bit corresponding to the terminal device in the first information field, where the first bit is configured to indicate a paging status of the terminal device.

A paging processing apparatus is further provided in an embodiment of the present disclosure, applied to a network device, including a storage, a transceiver, and a processor;

the storage is configured to store computer programs; the transceiver is configured to send and receive data under a control of the processor; the processor is configured to read the computer program in the memory to perform: determining a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;

according to a sub-group number corresponding to the terminal device, determining a first bit corresponding to the terminal device in the first information field, where the first bit is configured to indicate a paging status of the terminal device.

A paging processing apparatus is further provided in an embodiment of the present disclosure, applied to a terminal device, including:

a first determining unit, configured to determine a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;

a second determining unit, configured to, according to a sub-group number corresponding to the terminal device, determine a first bit corresponding to the terminal device in the first information field, where the first bit is configured to indicate a paging status of the terminal device.

A paging processing apparatus is further provided in an embodiment of the present disclosure, applied to network device, including:

a third determining unit, configured to determine a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;

a fourth determining unit, configured to, according to a sub-group number corresponding to the terminal device, determine a first bit corresponding to the terminal device in the first information field, where the first bit is configured to indicate a paging status of the terminal device.

A processor-readable storage medium is further provided in an embodiment of the present disclosure, where the processor-readable storage medium stores program instructions, the program instructions are configured to cause the processor to perform the paging processing method hereinabove.

The present disclosure has at least the following beneficial effects:

according to the embodiment of the present disclosure, a first information field corresponding to the terminal device is determined in first DCI according to a first paging occasion number, and a first bit corresponding to the terminal device in the first information field is determined according to a sub-group number corresponding to the terminal device, then it can be determined based on the first bit whether the terminal device is paged. Therefore, according to the embodiment of the present disclosure, through the N1 information fields in the first DCI and the information bits in the information field, it is able to indicate whether the UEs in different sub-groups are paged, thereby enabling UEs not being paged to directly enter low power consumption or sleep state, effectively reducing the power consumption of the terminal.

**BRIEF DESCRIPTION OF THE DRAWINGS**

Fig. 1 is a structural view of a network system to which embodiments of the present disclosure are applicable;

Fig. 2 is a first flow chart of a paging processing method according to the embodiment of the present disclosure;

Fig. 3 is a first schematic view of a first DCI according to the embodiment of the present disclosure;

Fig. 4 is a second schematic view of a first DCI according to the embodiment of the present disclosure;

Fig. 5 is a third schematic view of a first DCI according to the embodiment of the present disclosure;

Fig. 6 is a second flow chart of a paging processing method according to the embodiment of the present disclosure;

Fig. 7 is a first structural block view of a paging processing apparatus according to the embodiment of the present disclosure;

Fig. 8 is a second structural block view of a paging processing apparatus according to the embodiment of the present disclosure;

Fig. 9 is a first module schematic view of a paging processing apparatus according to the embodiment of the present disclosure; and

Fig. 10 is a second module schematic view of a paging processing apparatus according to the embodiment of the present disclosure.

**DETAILED DESCRIPTION**

Provided by the embodiments of the present disclosure can be applied to a variety of systems, especially fifth generation communication (the 5th Generation, 5G) systems. For example, applicable systems may be Global System of Mobile communication (GSM) system, Code Division Multiple Access (CDMA) system, Wideband Code Division Multiple Access (WCDMA) system, Time Division Synchronous Code Division Multiple Access (TD - SCDMA) system, general packet radio service (GPRS) system, Long Term Evolution (LTE) system (including TD -LTE) and FDD LTE), Long Term Evolution Advanced, LTE-A system, Universal Mobile Telecommunication System (UMTS), Worldwide Interoperability For Microwave Access (WiMAX) system, 5G New Radio (NR) system, etc. These various systems include terminal device and network device. The system can also include the core network part, such as Evloved Packet System (EPS), 5G system (5GS/5GC), etc.

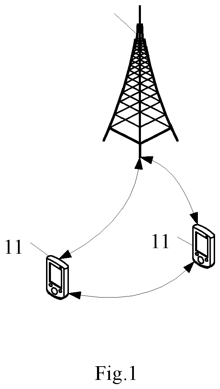

FIG. 1 shows a block diagram of a wireless communication system to which embodiments of the present disclosure are applicable. The wireless communication system includes a terminal 11 and a network device 12. The terminal 11 can also be called a terminal device or a User Equipment (UE). The terminal 11 can be a mobile phone, a Tablet Personal Computer, a Laptop Computer or a notebook computer, Personal Digital Assistants (PDAs), PDAs, Netbooks, Ultra-Mobile Personal Computers (UMPC), Mobile Internet Devices (MID), Wearable Device or Vehicle User Equipment (VUE), Pedestrian User Equipment (PUE) and other terminal side equipment. Wearable devices include: bracelets, headphones, glasses, etc. It should be noted that the embodiment of the present disclosure does not limit the specific type of terminal 11. The network device 12 may be a base station or a core network, where the base station may be referred to as a Node B, an evolved Node B, an access point, a Base Transceiver Station (BTS), a radio base station, a radio transceiver, or a basic service set. (Basic Service Set, BSS), Extended Service Set (ESS), B node, evolved B node (eNB), home B node, home evolved B node, wireless local area network (Wireless Local Area Network, WLAN) Access point, WiFi node, Transmitting Receiving Point (TRP) or some other appropriate terminology in the field, as long as the same technical effect is achieved, the base station is not limited to specific technical terms. It should be noted that in the embodiment of this disclosure, only the base station in the NR system is used as an example, but the specific type of base station is not limited.

The embodiments of the present disclosure will be clearly and completely described below with reference to the accompanying drawings in the embodiments of the present disclosure. Obviously, the described embodiments are only some of the embodiments of the present disclosure, not all of them. Based on the embodiments in this disclosure, all other embodiments obtained by those of ordinary skill in the art without creative efforts fall within the scope of protection of this disclosure.

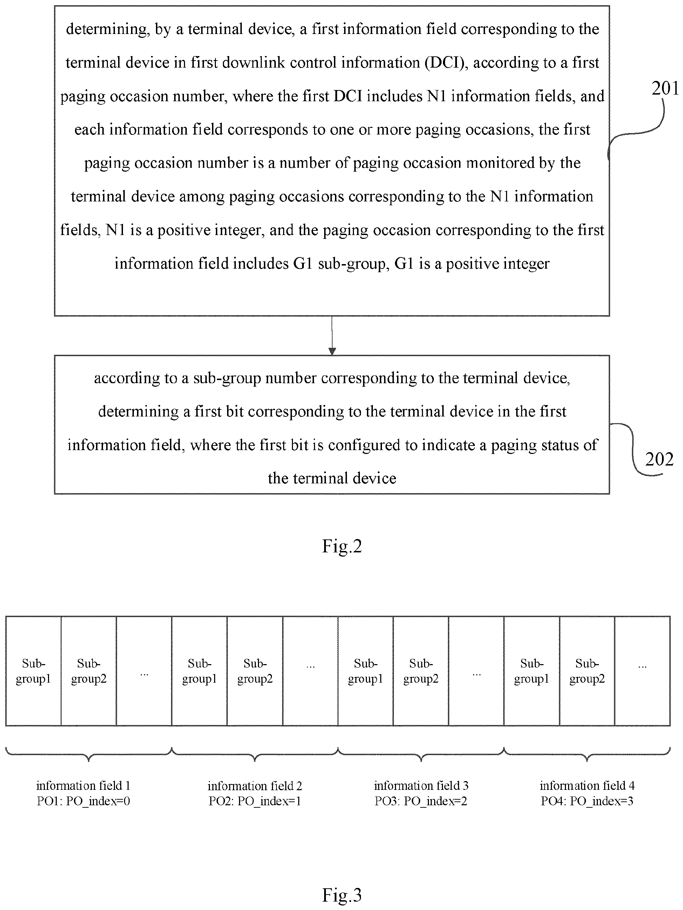

In Fig. 2, an embodiment of the present disclosure provides a paging processing method, including:

Step 201: determining, by a terminal device, a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer.

In this step, the above-mentioned first DCI may be an existing DCI format, such as reusing DCI format 2_6, or it may be a newly defined DCI format. The above-mentioned first DCI may indicate the paging status of N1 POs.

Optionally, before the above step 201, the method further includes:

receiving the first DCI sent by the network device.

Step 202: according to a sub-group number corresponding to the terminal device, determining a first bit corresponding to the terminal device in the first information field, where the first bit is configured to indicate a paging status of the terminal device.

Specifically, the above-mentioned first bit is configured to indicate whether the terminal device is paged or not paged. In addition, the quantity of information bits included in each information field is the same as quantity number of sub-groups included in the paging occasion corresponding to the information field. The quantity of information bits contained in respective information fields may be the same or different, for example, they may all contain G1 information bits. The above G1 information bits can indicate the paging status of the G1 sub-group corresponding to the paging occasion.

In the embodiment of the present disclosure, the above-mentioned first DCI carries PEI, and the PEI can indicate the paging status of multiple POs. This PEI supports sub-grouping. For example, if a UE on a PO is divided into n sub-groupings, when a UE in the PO is paged, the base station needs to send a PEI to indicate a paging to the sub-group in which the UE is located exists. At this time, all UEs in the same sub-group as the UE will receive paging DCI and paging PDSCH, while UEs in other sub-groups determine that their sub-group are not paged, and UEs in other sub-groups do not need to receive paging DCI and paging PDSCH but directly enter low power consumption or sleep state. Therefore, PEI supporting sub-group can reduce the power consumption of some UEs in the PO.

According to the embodiment of the present disclosure, the terminal device determines a first information field corresponding to the terminal device in first DCI according to a first paging occasion number, and a first bit corresponding to the terminal device in the first information field is determined according to a sub-group number corresponding to the terminal device, then it can be determined based on the first bit whether the terminal device is paged. Therefore, according to the embodiment of the present disclosure, through the N1 information fields in the first DCI and the information bits in the information field, it is able to indicate whether the UEs in different sub-groups are paged, thereby enabling UEs not being paged to directly enter low power consumption or sleep state, effectively reducing the power consumption of the terminal.

Optionally, the method of this embodiment of the present disclosure further includes:
determining a start positon of the first information field, according to at least one of the first paging occasion number or the G1.

Further, the start position of the first information field satisfies the following formula:

$$\text{Location\_start } 1 = \text{PO\_index} * G1, \text{ or, Location\_start1} = \text{PO\_index} * G1 + 1;$$

where Location_start 1 represents the start position of the first information field, and PO_index represents the first paging occasion number.

Optionally, prior to the determining by a terminal device the first information field corresponding to the terminal device in first DCI according to the first paging occasion number, the method further includes:

determining the first paging occasion number according to paging parameters;
where the paging parameters include at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

Further, the first paging occasion number satisfies the following formula:

$$\text{PO\_Index} = (\text{SFN\_PF} * N * Ns / T + i\_s) \bmod N1;$$

where PO_Index represents the first paging occasion number, SFN_PF represents the SFN of the paging frame corresponding to the paging occasion, N represents the quantity of paging frames in the DRX cycle, and Ns represents the quantity of paging occasions in the paging frame, T represents the length of the DRX cycle, and i_s represents the index of the paging occasion in the paging frame.

Optionally, each information field corresponds to one paging occasion, and the first information field includes G1 information bits, and each information bit corresponds to one sub-group.

As a first embodiment, the first information field further includes X1 indication bits, the X1 indication bits are configured to indicate relevant information of the paging occasion, and X1 is a positive integer.

In this embodiment, in addition to G1 (the quantity of sub-groups included in the paging occasion corresponding to this information field) information bits, each information field may also include X1 indication bits through which the relevant information of paging occasion can be indicated.

The relevant information of the paging occasion includes one or more of the following:

an availability of a Tracking Reference Signal (TRS);
whether an Earthquake and Tsunami Warning System (ETWS) sends notification information;
whether to send a system message update indication; or
indication information of a beam of a TRS.

Optionally, this embodiment further includes:
determining a start position of the first information field based on at least one of the first paging occasion number, the G1 or the X1.
Further, the start position of the first information field satisfies the following formula:

$$Location\_start1 = PO\_index*(G1+X1),$$

or,

$$Location\_start1 = PO\_index*(G1+X1)+1;$$

where Location _start 1 represents the start position of the first information field, and PO_index represents the first paging occasion number.
As a second embodiment, the first DCI further includes an indication field configured to indicate relevant information of the paging occasion.
In this implementation manner, in addition to the above-mentioned N1 information fields, the first DCI further includes an indication field, which is configured to indicate relevant information of the paging occasion, and the relevant information of the paging occasion includes one or more of the following:

an availability of a Tracking Reference Signal (TRS);
whether an Earthquake and Tsunami Warning System (ETWS) sends notification information;
whether to send a system message update indication; or
indication information of a beam of a TRS.

Optionally, in the first embodiment, the above indication field is located subsequent to N1 information fields.
Optionally, this first embodiment further includes:
determining a start positon of the first information field, according to at least one of the first paging occasion number or the G1.
Further, the start position of the first information field satisfies the following formula:

$$Location\_start\ 1 = PO\_index*G1,\ or,\ Location\_start1 = PO\_index*G1+1;$$

where Location_start 1 represents the start position of the first information field, and PO_index represents the first paging occasion number.
Optionally, this first embodiment further includes:
determining a start position of the indication field based on at least one of the N1 or the G1.
Further, the start position of the indication field satisfies the following formula:

$$Location\_start2 = N1*G1,\ or\ Location\_start2 = N1*G1+1;$$

where Location_start2 indicates the start position of the indication field.
Optionally, in the second embodiment, the indication field is located prior to the N1 information fields.
This second embodiment further includes:

determining a start position of the first information field based on at least one of the first paging occasion number, the G1 or the X1.

Further, the start position of the first information field satisfies the following formula:

$$Location\_start1 = PO\_index*G1+X1;$$

or,

$$Location\_start1 = PO\_index*G1+X1+1;$$

where Location _start 1 represents the start position of the first information field, and PO_index represents the first paging occasion number.

Optionally, in this second embodiment, the start position of the indication field is a first bit of the first DCI.

The present disclosure will be described below with reference to specific embodiments.

Example 1:

Step 1: the terminal device determines that the terminal device corresponds to the first information field in the first DCI according to the paging occasion number, and the first DCI includes at least one information field;

the first DCI may be an existing DCI format or a newly defined DCI format. For example, reuse DCI format 2_6. The first DCI includes at least one information field. For example, the first DCI includes N1 information fields, and each information field corresponds to a PO. That is, the first DCI can indicate the paging status of N1 POs.

The terminal device determines the paging occasion number of the paging occasion it monitors among the N1 paging occasions (the first paging occasion number), and determines its corresponding information field in the N1 information fields in the first DCI based on the sub-group number corresponding to the terminal device. As shown in Fig. 3, assuming that one DCI-based PEI corresponds to 4 POs, that is, N1=4, the first DCI includes 4 information fields, that is, information fields 1, 2, 3, and 4. First, the UE determines the paging occasion number among the four paging occasions. For example, the UE monitoring PO1 determines that the paging occasion number (PO_index) among the four paging occasions is 0, and the UE monitoring PO2 determines that the paging occasion number (PO_index) among the four paging occasions is 1, and so on. At this time, the terminal device can determine its corresponding information field among the N1 information fields according to the paging occasion number. For example, the UE monitoring PO1 corresponds to information field 1, the UE monitoring PO2 corresponds to information field 2, and so on.

The paging occasion number corresponding to the terminal device satisfies the following formula:

PO_Index=(SFN_PF*N*Ns/T+i_s) mod N1. This formula is detailed in the description above and will not be repeated here.

The following describes the correspondence between PO_Index and each parameter through Table 1 and Table 2. Table 1 is for the case of dense POs, and Table 2 is for the case of sparse POs.

Table 1

| N | Ns | SFN_PF | i_s | SFN_PF*N*Ns/T+i_s | N1 | PO_Index |
|---|----|--------|-----|-------------------|----|----------|
| T | 4  | 0      | 0   | 0                 | 4  | 0        |
| T | 4  | 0      | 1   | 1                 | 4  | 1        |
| T | 4  | 0      | 2   | 2                 | 4  | 2        |
| T | 4  | 0      | 3   | 3                 | 4  | 3        |
| T | 4  | 1      | 0   | 4                 | 4  | 0        |
| T | 4  | 1      | 1   | 5                 | 4  | 1        |
| T | 4  | 1      | 2   | 6                 | 4  | 2        |
| T | 4  | 1      | 3   | 7                 | 4  | 3        |

Table 2

| N | Ns | SFN_PF | i_s | SFN_PF*N*Ns/T+i_s | N1 | PO_Index |
|---|---|---|---|---|---|---|
| T/4 | 1 | 0 | 0 | 0 | 2 | 0 |
| T/4 | 1 | 4 | 0 | 1 | 2 | 1 |
| T/4 | 1 | 8 | 0 | 2 | 2 | 0 |
| T/4 | 1 | 12 | 0 | 3 | 2 | 1 |

Through the above calculation formula, the UE can determine the PO_index, and determine the corresponding information field of the UE among the N1 information fields in the first DCI through the PO_index. For example, there is a one-to-one correspondence between PO_index and information field index. The indexes of N1 information fields in the first DCI are 0,..., N1-1. The value of PO_index calculated by the UE is the value of the index of its corresponding information field.

Step 2: according to a sub-group number corresponding to the terminal device, determining a first bit corresponding to the terminal device in the first information field, where the first bit is configured to indicate a paging status of the terminal device.

The above sub-group number can also be described as an initial sub-group number, and the initial sub-group number can be represented by initial sub-group number or sub-group_init. In this embodiment, the UEs on a PO is divided into n sub -groups, each sub-group corresponds to a sub-group number, and the above-mentioned initial sub-group number is the sub-group number corresponding to the terminal device. The method for the terminal device to determine the initial sub-group number may include: the core network or network device provides the terminal device with specific initial sub-group number information; when the core network or network device does not provide the terminal device with specific initial sub-group number information, the terminal device can calculate the initial sub-group number information based on the paging parameters N, Ns, UE_ID, etc. The embodiments of the present disclosure do not limit how the terminal device determines the initial sub-group number.

Different information fields among the N1 information fields in the first DCI correspond to different paging occasions. The quantity of bits contained in each information field is the same as the quantity of sub-groups contained in the corresponding paging occasion. Optionally, the numbers of sub-groups included in different paging occasions are the same. Of course, the quantity of sub-groups included in different paging occasions may also be different, and this is not specifically limited in this embodiment of the disclosure. Assuming that 1 DCI-based PEI corresponds to N1 POs. At this time, the first DCI contains N1 information fields. Assuming that each PO contains G1 sub-groups, that is, each information field contains G1 bits. The terminal device determines that it corresponds to first bit in the first information field according to the initial sub-group number, for example, N1=4, G1=8. At this time, the first information field corresponding to the terminal device contains 8 bits, numbered 0, 1, ..., 7. The first bit corresponding to the terminal device in the first information field is the bit corresponding to the initial sub-group number. For example, the initial sub-group number is 0, which corresponds to the bit number 0 in the first information field.

Alternatively, in addition to G1 bits corresponding to G1 sub-groups of each PO, each information field may also include X1 bits. These X1 bits are used for PO-level information indication, such as indicating TRS availability and whether ETWS is sent., whether to send system message update indication, indication information of a beam of a TRS tracked by the time-frequency channel, etc. The TRS availability refers to whether the UE in Radio Resource Control-IDLE (RRC_IDLE) state can use TRS for time-frequency tracking.

In addition, the first bit used to indicate the paging status of the terminal device includes: the first bit indicates that the terminal device is paged or not paged, that is, regardless of whether the terminal device is paged or not paged, the network device is necessary to send the first DCI containing the first bit; or, the first bit is configured to indicate that the terminal device is paged, that is, only when the terminal device is paged, the network device sends the first DCI containing the first bit; or, the first bit is configured to indicate that the terminal device is not paged, that is, only when the network device does not perform a paging, the network device sends the first DCI containing the first bit.

In the embodiment of the present disclosure, it is also necessary to determine the start position of the above-mentioned first information field. Specifically, it is assumed that 1 PEI corresponds to N1 POs, and 1 PO corresponds to G1 sub-groups. The parameters N1 and G1 are notified by the System Information Block-X (SIB-X) broadcasted by the base station. The first DCI includes N1 information fields, assuming N1=4, as shown in Fig. 3. It is assumed that the DCI-based PEI only contains sub-group indications and does not contain other information indications (that is, it only contains the above information bits). For UEs in the RRC_IDLE state, assuming that the quantity of bits in each information field is the same, for example, each information field includes G1 bits, the start position of each information field and corresponding bit in each information field in different sub-groups in each PO can be calculated. For example, the start position of each information field can be determined by the following formula: Location_start1 = PO_index*G1, or,

Location_start1 = PO_index*G1+1.

Optionally, if the bits in the first DCI are numbered from 0, then the formula for determining the start position of each information field is: Location_start1 = PO_index*G1; if the bits in the first DCI are numbered from 1, then the formula for determining the start position of each information field is: Location_start1 = PO_index*G1+1. Location _start 1 is the start position of the first information field in the first DCI, that is, the bit position in the first DCI. The relationship between the start position of the first information field, G1 and PO_index is as shown in Table 3.

Table 3

| PO_index | G1 | Location_start1 |
|----------|----|-----------------|
| 0 | 8 | 0 |
| 1 | 8 | 8 |
| 2 | 8 | 16 |
| 3 | 8 | 24 |

In addition, the bit positions of different sub-groups of different POs in the first DCI satisfy the following formula:

$$\text{Location\_bit} = \text{PO\_index*G1} + \text{sub-group\_init}.$$

Step 3: The terminal device receives the first DCI.

This step 3 can be performed before steps 1 and 2 above.

Example 2:

Step 1: determining, by a terminal device, a first information field corresponding to the terminal device in first DCI, according to a paging occasion number, where the first DCI includes at least one information field.

This step 1 is the same as step 1 in Embodiment 1, and will not be described again here.

Step 2: according to a sub-group number corresponding to the terminal device, determining a first bit corresponding to the terminal device in the first information field, where the first bit is configured to indicate a paging status of the terminal device.

The method for determining the sub-group number corresponding to the terminal device has been described in detail in Embodiment 1 and will not be described again here.

In this embodiment, in addition to N1 information fields, the first DCI further includes an indication field. Different information fields among the N1 information fields correspond to different paging occasions. The quantity of bits contained in each information field is the same as the quantity of sub-groups contained in the corresponding paging occasions. Optionally, the numbers of sub-groups contained in the different paging occasions are the same. Of course, the quantity of sub-groups included in different paging occasions may also be different, and this is not specifically limited in this embodiment of the disclosure. The above indication field is configured to indicate relevant information of the paging occasion. The indication field may include X1 bits. The X1 bits are composed of at least one of M1, M2, M3, and M4 bits, where M1 bits are used to indicate TRS availability, M2 bits are used to indicate whether ETWS sends notification information, M3 bits are used to indicate whether to send a system message update indication, and M4 bits are used to indicate indication information of a beam of a TRS.

Assuming that 1 DCI-based PEI corresponds to N1 POs. At this time, the first DCI contains N1 information fields. It is assumed that each PO contains G1 sub-groups, that is, each information field contains G1 bits. The terminal device determines the corresponding first bit in the first information field according to the initial sub-group number, for example, N1=4, G1=8. At this time, the first information field corresponding to the terminal device contains 8 bits, numbered 0, 1,..., 7. The first bit corresponding to the terminal device in the first information field is the bit corresponding to the initial sub-group number. For example, the initial sub-group number is 0, which corresponds to the bit number 0 in the first information field.

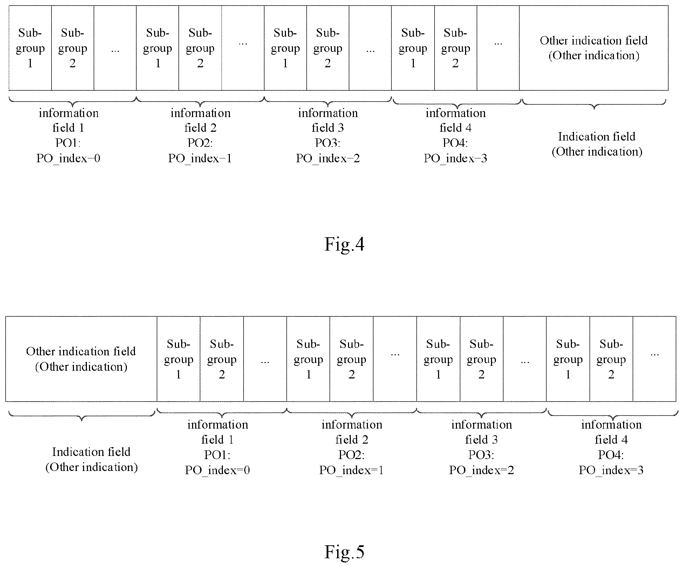

In the embodiment of the present disclosure, it is also necessary to determine the start position of the above-mentioned first information field. Assuming that the N1 information fields are located in the head of the first DCI, and the indication field is located in the rear of the first DCI, as shown in Fig. 4, assuming that 1 PEI corresponds to N1 POs, and 1 PO corresponds to G1 sub-groups. The parameters N1 and G1 are notified by SIB-X broadcast by the base station. The first DCI includes N1 information fields and 1 indication field, assuming that N1 is 4.

Corresponding information fields of different POs are determined through PO_index. As shown in Fig. 4, PO1 corresponds to information field 1, PO2 corresponds to information field 2, PO3 corresponds to information field 3, and PO4 corresponds to information field 4. The indication field (or additional information field (other indication)) occupies X1 bits.

The start positions of information fields 1-4 can be determined by the following formula: Location_start1 = PO_index*G1, or Location_start1 = PO_index*G1+1. The start position of the indication field is determined by the formula: Location_start2 = N1*G1, or, Location_start2 = N1*G1+1.

Step 3: the terminal device receiving the first DCI.

This step 3 can be performed before steps 1 and 2 above.

Embodiment 3: Step 1: determining, by a terminal device, a first information field corresponding to the terminal device in first downlink control information (DCI), according to a paging occasion number, where the first DCI includes at least one information field.

This step 1 is the same as step 1 in Embodiment 1, and will not be described again here.

Step 2: according to a sub-group number corresponding to the terminal device, determining a first bit corresponding to the terminal device in the first information field, where the first bit is configured to indicate a paging status of the terminal device.

The method for determining the sub-group number corresponding to the terminal device has been described in detail in Embodiment 1, and will not be described again here.

In this embodiment, in addition to N1 information fields, the first DCI further includes an indication field. Different information fields among the N1 information fields correspond to different paging occasions. The quantity of bits contained in each information field is the same as the quantity of sub-groups contained in the corresponding paging occasions. Optionally, the quantity of sub-groups contained in the different paging occasions are the same. Of course, the quantity of sub-groups included in different paging occasions may also be different, and this is not specifically limited in this embodiment of the disclosure. The above indication field is configured to indicate relevant information of the paging occasion. The indication field may include X1 bits. The X1 bits are composed of at least one of M1, M2, M3, and M4 bits, where M1 bits are used to indicate TRS availability, M2 bits are used to indicate whether ETWS sends notification information, and M3 bits are used to indicate whether to send a system message update indication, and M4 bits are used to indicate the indication information of the beam tracking the reference signal.

Assume that 1 DCI-based PEI corresponds to N1 POs. At this time, the first DCI contains N1 information fields. It is assumed that each PO contains G1 sub-groups, that is, each information field contains G1 bits. The terminal device determines the corresponding first bit in the first information field according to the initial sub-group number, for example, N1=4, G1=8. At this time, the first information field corresponding to the terminal device contains 8 bits, numbered 0, 1,..., 7. The first bit corresponding to the terminal device in the first information field is the bit corresponding to the initial sub-group number. For example, the initial sub-group number is 0, which corresponds to the bit with bit number 0 in the first information field.

In the embodiment of the present disclosure, it is also necessary to determine the start position of the above-mentioned first information field. Assume that the indication field is located in head of the first DCI, and the N1 information fields are located in the rear of the first DCI, as shown in Fig. 5. Assuming that 1 PEI corresponds to N1 POs, and 1 PO corresponds to G1 sub-groups, the parameters N1 and G1 are notified by SIB-X broadcast by the base station. The first DCI includes N1 information fields and 1 indication field, assuming N1 is 4.

Corresponding information fields of different POs are determined through PO_index. As shown in Fig. 5, PO1 corresponds to information field 1, PO2 corresponds to information field 2, PO3 corresponds to information field 3, and PO4 corresponds to information field 4. The indication field (or additional information field (other indication)) occupies X1 bits.

where the start position of information fields 1-4 can be determined by the following formula: Location_start1 = PO_index*G1+X1; or, Location_start1= PO_index*G1+X1+1. The start position of the indication field is the first bit of the first DCI, and the first bit can be numbered from 0 or 1.

According to the embodiment of the present disclosure, the terminal device determines a first information field corresponding to the terminal device in first DCI according to a first paging occasion number, and a first bit corresponding to the terminal device in the first information field is determined according to a sub-group number corresponding to the terminal device, then it can be determined based on the first bit whether the terminal device is paged. Therefore, according to the embodiment of the present disclosure, through the N1 information fields in the first DCI and the G1 information bits in the information field, it is able to indicate whether the UEs in different sub-groups are paged, thereby enabling UEs not being paged to directly enter low power consumption or sleep state, effectively reducing the power consumption of the terminal.

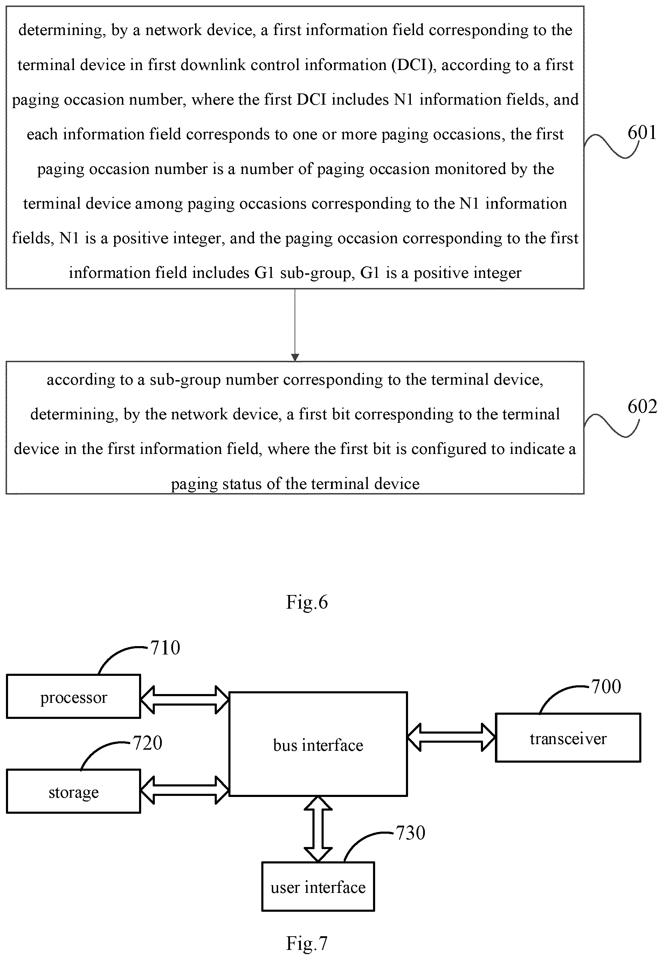

As shown in Fig. 6, an embodiment of the present disclosure also provides a paging processing method, including:

Step 601: determining, by a network device, a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasions corresponding to the first information field includes G1 sub-group, G1 is a positive integer.

In this step, the first DCI may be an existing DCI format or a newly defined DCI format, such as reusing DCI format 2_6. The above-mentioned first DCI may indicate the paging status of N1 POs.

Step 602: according to a sub-group number corresponding to the terminal device, determining, by the network device, a first bit corresponding to the terminal device in the first information field, where the first bit is configured to indicate a paging status of the terminal device.

Specifically, the above-mentioned first bit is configured to indicate whether the terminal device is paged or not paged. In addition, the quantity of information bits included in each information field is the same as the quantity of sub-groups included in the paging occasion corresponding to the information field. The quantity of information bits contained in respective information fields may be the same or different, for example, they may all contain G1 information bits. The above G1 information bits can indicate the paging status of the G1 sub-group corresponding to the paging occasion.

Optionally, after the above step 602, it further includes:
sending the first DCI to the terminal.

In the embodiment of the present disclosure, the above-mentioned first DCI carries PEI, and the PEI can indicate the paging status of multiple POs. This PEI supports sub-grouping. For example, if a UE on a PO is divided into n sub-groupings, when a UE in the PO is paged, the base station needs to send a PEI to indicate a paging to the sub-group in which the UE is located exists. At this time, all UEs in the same sub-group as the UE will receive paging DCI and paging PDSCH, while UEs in other sub-groups determine that their sub-group are not paged, and UEs in other sub-groups do not need to receive paging DCI and paging PDSCH but directly enter low power consumption or sleep state. Therefore, PEI supporting sub-group can reduce the power consumption of some UEs in the PO.

According to the embodiment of the present disclosure, the network device determines a first information field corresponding to the terminal device in first DCI according to a first paging occasion number, and a first bit corresponding to the terminal device in the first information field is determined according to a sub-group number corresponding to the terminal device, then it can be determined based on the first bit whether the terminal device is paged. Therefore, according to the embodiment of the present disclosure, through the N1 information fields in the first DCI and the information bits in the information field, it is able to indicate whether the UEs in different sub-groups are paged, thereby enabling UEs not being paged to directly enter low power consumption or sleep state, effectively reducing the power consumption of the terminal.

Optionally, the method e further includes:
determining a start positon of the first information field, according to at least one of the first paging occasion number or the G1.

Further, the start position of the first information field satisfies the following formula:

$$\text{Location\_start } 1 = \text{PO\_index} * G1, \text{ or, Location\_start1} = \text{PO\_index} * G1 + 1;$$

where Location_start 1 represents the start position of the first information field, and PO_index represents the first paging occasion number.

Optionally, prior to the determining by a terminal device the first information field corresponding to the terminal device in first DCI according to the first paging occasion number, the method further includes:

determining the first paging occasion number according to paging parameters;
where the paging parameters include at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

Further, the first paging occasion number satisfies the following formula:

$$\text{PO\_Index} = （\text{SFN\_PF} * N * Ns/T + i\_s） \bmod N1;$$

where PO_Index represents the first paging occasion number, SFN_PF represents the SFN of the paging frame corresponding to the paging occasion, N represents the quantity of paging frames in the DRX cycle, and Ns represents the quantity of paging occasions in the paging frame, T represents the length of the DRX cycle, and i_s represents the index of the paging occasion in the paging frame.

Optionally, each information field corresponds to one paging occasion, and the first information field includes G1 information bits, and each information bit corresponds to one sub-group.

As a first embodiment, the first information field further includes X1 indication bits, the X1 indication bits are configured to indicate relevant information of the paging occasion, and X1 is a positive integer.

In this embodiment, in addition to G1 (the quantity of sub-groups included in the paging occasion corresponding to this information field) information bits, each information field may also include X1 indication bits through which the relevant information of paging occasion can be indicated.

The relevant information of the paging occasion includes one or more of the following:

an availability of a Tracking Reference Signal (TRS);
whether an Earthquake and Tsunami Warning System (ETWS) sends notification information;
whether to send a system message update indication; or
indication information of a beam of a TRS.

Optionally, this embodiment further includes:
determining a start position of the first information field based on at least one of the first paging occasion number, the G1 or the X1.

Further, the start position of the first information field satisfies the following formula:

$$\text{Location\_start1} = \text{PO\_index} * (\text{G1} + \text{X1}),$$

or,

$$\text{Location\_start1} = \text{PO\_index} * (\text{G1} + \text{X1}) + 1;$$

where Location_start1 represents the start position of the first information field, and PO_index represents the first paging occasion number..

As a second embodiment, the first DCI further includes an indication field configured to indicate relevant information of the paging occasion.

In this implementation manner, in addition to the above-mentioned N1 information fields, the first DCI further includes an indication field, which is configured to indicate relevant information of the paging occasion, and the relevant information of the paging occasion includes one or more of the following:

an availability of a Tracking Reference Signal (TRS);
whether an Earthquake and Tsunami Warning System (ETWS) sends notification information;
whether to send a system message update indication; or
indication information of a beam of a TRS.

Optionally, in the first embodiment, the above indication field is located subsequent to N1 information fields.

Optionally, this first embodiment further includes:
determining a start positon of the first information field, according to at least one of the first paging occasion number or the G1.

Further, the start position of the first information field satisfies the following formula:

$$\text{Location\_start 1} = \text{PO\_index} * \text{G1}, \text{ or, Location\_start1} = \text{PO\_index} * \text{G1} + 1;$$

where Location_start 1 represents the start position of the first information field, and PO_index represents the first paging occasion number.

Optionally, this first embodiment further includes:

determining a start position of the indication field based on at least one of the N1 or the G1.

Further, the start position of the indication field satisfies the following formula:

$$\text{Location\_start2} = \text{N1*G1, or Location\_start2} = \text{N1*G1+1};$$

where Location_start2 indicates the start position of the indication field.

Optionally, in the second embodiment, the indication field is located prior to the N1 information fields.

This second embodiment further includes:

determining a start position of the first information field based on at least one of the first paging occasion number, the G1 or the X1.

Further, the start position of the first information field satisfies the following formula:

$$\text{Location\_start1} = \text{PO\_index*G1+X1};$$

or,

$$\text{Location\_start1} = \text{PO\_index*G1+X1+1};$$

where Location _start 1 represents the start position of the first information field, and PO_index represents the first paging occasion number.

Optionally, in this second embodiment, the start position of the indication field is a first bit of the first DCI.

According to the embodiment of the present disclosure, the network device determines a first information field corresponding to the terminal device in first DCI according to a first paging occasion number, and a first bit corresponding to the terminal device in the first information field is determined according to a sub-group number corresponding to the terminal device, then it can be determined based on the first bit whether the terminal device is paged. Therefore, according to the embodiment of the present disclosure, through the N1 information fields in the first DCI and the information bits in the information field, it is able to indicate whether the UEs in different sub-groups are paged, thereby enabling UEs not being paged to directly enter low power consumption or sleep state, effectively reducing the power consumption of the terminal.

Fig. 7, the embodiment of the present disclosure also provides a paging processing apparatus, which is applied to terminal device and includes a storage 720, a transceiver 700, and a processor 710;

the storage 720 is configured to store computer programs; the transceiver 700 is configured to send and receive data under a control of the processor 720; the processor 710 is configured to read the computer program in the storage 720 to perform:

determining a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;

according to a sub-group number corresponding to the terminal device, determining a first bit corresponding to the terminal device in the first information field, where the first bit is configured to indicate a paging status of the terminal device.

In FIG. 7, the bus architecture may include any number of interconnected buses and bridges, specifically one or more processors represented by processor 710 and various circuits of the memory represented by storage 720 are linked together. The bus architecture can also link together various other circuits such as peripherals, voltage regulators, and power management circuits, which are all well known in the art and therefore will not be described further herein. The bus interface provides the interface. Transceiver 700 may be a plurality of elements, including a transmitter and a receiver, providing a unit for communicating with various other devices over transmission media, including wireless channels, wired channels, optical cables, etc. Transmission medium. For different user equipment, the user interface 730 can also be an interface capable of externally connecting internal and external required equipment. The connected equipment includes but is not limited to a keypad, a display, a speaker, a microphone, a joystick, etc.

The processor 710 is responsible for managing the bus architecture and general processing, and the storage 720 can store data used by the processor 710 when performing operations.

Optionally, the processor 710 may be a Central Processing Unit (CPU), an Application Specific Integrated Circuit (ASIC), a Field-Programmable Gate Array (Field - Programmable Gate Array, FPGA) or a complex programmable gate array. Programmable logic device (Complex Programmable Logic Device, CPLD), the processor can also adopt a multi-core architecture.

Any of the methods provided by the embodiments of the present disclosure is performed according to the obtained executable instructions by calling the computer program stored in the memory. The processor and memory can also be physically separated.

Optionally, prior to the determining by a terminal device the first information field corresponding to the terminal device in first DCI according to the first paging occasion number, the processor 710 is further configured to perform:

determining the first paging occasion number according to paging parameters;
where the paging parameters include at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

Optionally, the first paging occasion number satisfies the following formula:

$$PO\_Index= （SFN\_PF*N*Ns/T+i\_s） \bmod N1;$$

where PO_Index represents the first paging occasion number, SFN_PF represents the SFN of the paging frame corresponding to the paging occasion, N represents the quantity of paging frames in the DRX cycle, and Ns represents the quantity of paging occasions in the paging frame, T represents the length of the DRX cycle, and i_s represents the index of the paging occasion in the paging frame.

Optionally, each information field corresponds to one paging occasion, and the first information field includes G1 information bits, and each information bit corresponds to one sub-group.

Optionally, the first information field further includes X1 indication bits, the X1 indication bits are configured to indicate relevant information of the paging occasion, and X1 is a positive integer.

Optionally, the processor 710 is further configured to perform:
determining a start positon of the first information field, according to at least one of the first paging occasion number, the G1 or the X1.

Optionally, the start position of the first information field satisfies the following formula:

$$Location\_start1=PO\_index*(G1+X1),$$

or,

$$Location\_start1= PO\_index*(G1+X1)+1;$$

where Location_start1 represents the start position of the first information field, and PO_index represents the first paging occasion number.

Optionally, the first DCI further includes an indication field configured to indicate relevant information of the paging occasion.

Optionally, the relevant information of the paging occasion includes one or more of the following:

an availability of a Tracking Reference Signal (TRS);
whether an Earthquake and Tsunami Warning System (ETWS) sends notification information;
whether to send a system message update indication; or
indication information of a beam of a TRS.

Optionally, the indication field is located subsequent to the N1 information fields.

Optionally, the processor 710 is further configured to perform:
determining a start positon of the first information field, according to at least one of the first paging occasion number or the G1.

Optionally, the start position of the first information field satisfies the following formula:

$$Location\_start\ 1 = PO\_index * G1, \text{ or, } Location\_start1 = PO\_index * G1 + 1;$$

where Location_start 1 represents the start position of the first information field, and PO_index represents the first paging occasion number.

Optionally, the processor 710 is further configured to perform:
determining a start position of the indication field based on at least one of the N1 or the G1.

Optionally, the start position of the indication field satisfies the following formula:

$$Location\_start2 = N1 * G1, \text{ or } Location\_start2 = N1 * G1 + 1;$$

where Location_start2 indicates the start position of the indication field.

Optionally, the indication field is located prior to the N1 information fields.

Optionally, the processor 710 is further configured to perform:
determining a start position of the first information field based on at least one of the first paging occasion number, the G1 or the X1.

Optionally, the start position of the first information field satisfies the following formula:

$$Location\_start1 = PO\_index * G1 + X1;$$

or,

$$Location\_start1 = PO\_index * G1 + X1 + 1;$$

where Location_start1 represents the start position of the first information field, and PO_index represents the first paging occasion number.

Optionally, the start position of the indication field is a first bit of the first DCI.

It should be noted here that the above-mentioned device provided by the embodiment of the present disclosure can implement all the method steps implemented by the above-mentioned paging processing method embodiment applied to terminal device, and can achieve the same technical effect. This article will no longer be explained here. The parts and beneficial effects in the embodiments that are the same as those in the method embodiments will be described in detail.

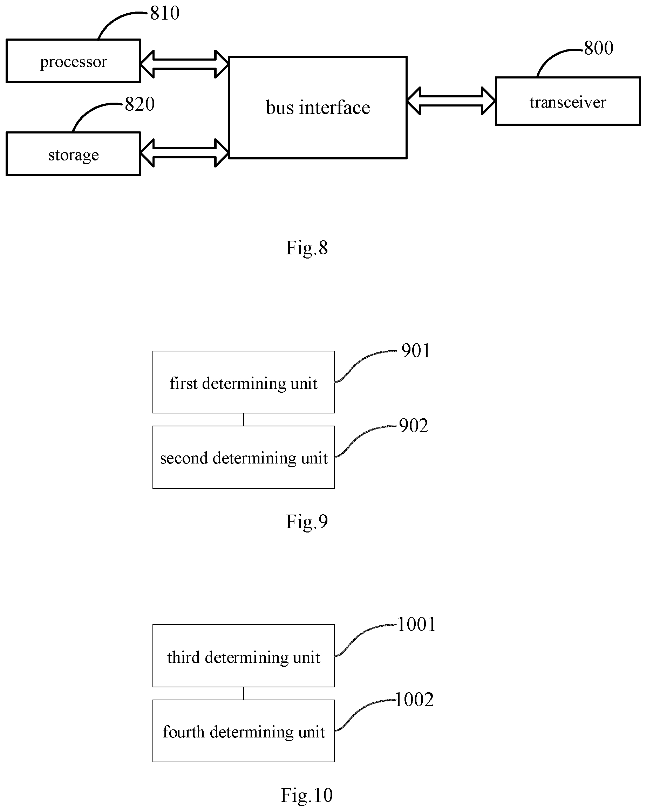

As shown in Fig. 8, the embodiment of the present disclosure also provides a paging processing apparatus, which is applied to network device. The device applied to a network device, including a storage 820, a transceiver 800, and a processor 810;

the storage 820 is configured to store computer programs; the transceiver 800 is configured to send and receive data under a control of the processor 810; the processor 810 is configured to read the computer program in the storage 820 to perform:
determining a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;
according to a sub-group number corresponding to the terminal device, determining a first bit corresponding to the terminal device in the first information field, where the first bit is configured to indicate a paging status of the terminal device.

Optionally, prior to the determining by the network device the first information field corresponding to the terminal device in first DCI according to the first paging occasion number, the processor 810 is further configured to perform:

determining the first paging occasion number according to paging parameters;
where the paging parameters include at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

Optionally, the first paging occasion number satisfies the following formula:

$$PO\_Index = (SFN\_PF*N*Ns/T+i\_s) \bmod N1;$$

where PO_Index represents the first paging occasion number, SFN_PF represents the SFN of the paging frame corresponding to the paging occasion, N represents the quantity of paging frames in the DRX cycle, and Ns represents the quantity of paging occasions in the paging frame, T represents the length of the DRX cycle, and i_s represents the index of the paging occasion in the paging frame.

Optionally, each information field corresponds to one paging occasion, and the first information field includes G1 information bits, and each information bit corresponds to one sub-group.

Optionally, the first information field further includes X1 indication bits, the X1 indication bits are configured to indicate relevant information of the paging occasion, and X1 is a positive integer.

Optionally, the processor 810 is further configured to perform:
determining a start positon of the first information field, according to at least one of the first paging occasion number, the G1 or the X1.

Optionally, the start position of the first information field satisfies the following formula:

$$Location\_start1 = PO\_index*(G1+X1),$$

or,

$$Location\_start1 = PO\_index*(G1+X1)+1;$$

where Location_start1 represents the start position of the first information field, and PO_index represents the first paging occasion number.

Optionally, the first DCI further includes an indication field configured to indicate relevant information of the paging occasion.

Optionally, the relevant information of the paging occasion includes one or more of the following:

an availability of a Tracking Reference Signal (TRS);
whether an Earthquake and Tsunami Warning System (ETWS) sends notification information;
whether to send a system message update indication; or
indication information of a beam of a TRS.

Optionally, the indication field is located subsequent to the N1 information fields.

Optionally, the processor 810 is further configured to perform:
determining a start positon of the first information field, according to at least one of the first paging occasion number or the G1.

Optionally, the start position of the first information field satisfies the following formula:

$$Location\_start\ 1 = PO\_index * G1,\ or,\ Location\_start1 = PO\_index * G1 + 1;$$

where Location_start 1 represents the start position of the first information field, and PO_index represents the first paging occasion number.

Optionally, the processor 810 is further configured to perform:

determining a start position of the indication field based on at least one of the N1 or the G1.

Optionally, the start position of the indication field satisfies the following formula:

$$Location\_start2 = N1 * G1,\ or\ Location\_start2 = N1 * G1 + 1;$$

where Location_start2 indicates the start position of the indication field.

Optionally, the indication field is located prior to the N1 information fields.

Optionally, the processor 810 is further configured to perform:

determining a start position of the first information field based on at least one of the first paging occasion number, the G1 or the X1.

Optionally, the start position of the first information field satisfies the following formula:

$$Location\_start1 = PO\_index * G1 + X1;$$

or,

$$Location\_start1 = PO\_index * G1 + X1 + 1;$$

where Location_start1 represents the start position of the first information field, and PO_index represents the first paging occasion number..

Optionally, the start position of the indication field is a first bit of the first DCI.

In FIG. 8, the bus architecture may include any number of interconnected buses and bridges, specifically one or more processors represented by processor 810 and various circuits of the memory represented by memory 820 are linked together. The bus architecture can also link together various other circuits such as peripherals, voltage regulators, and power management circuits, which are all well known in the art and therefore will not be described further herein. The bus interface provides the interface. The transceiver 800 may be a plurality of components, including a transmitter and a receiver, providing a unit for communicating with various other devices over transmission media, including wireless channels, wired channels, optical cables, and other transmission media. The processor 810 is responsible for managing the bus architecture and general processing, and the memory 820 can store data used by the processor 810 when performing operations.

The processor 810 may be a Central Processing Unit (CPU), an Application Specific Integrated Circuit (ASIC), a Field - Programmable Gate Array (FPGA) or a complex programmable logic device (Complex Programmable Logic Device (CPLD), the processor can also adopt a multi-core architecture.

It should be noted here that the above-mentioned device provided by the embodiment of the present disclosure can implement all the method steps implemented by the above-mentioned paging processing method embodiment applied to network device, and can achieve the same technical effect. This article will no longer be explained here. The parts and beneficial effects in the embodiments that are the same as those in the method embodiments will be described in detail.

As shown in Fig. 9, an embodiment of the present disclosure also provides a paging processing apparatus, which is applied to terminal device and includes:

a first determining unit 901, configured to determine a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;

a second determining unit 902, configured to, according to a sub-group number corresponding to the terminal device, determine a first bit corresponding to the terminal device in the first information field, where the first bit is configured to indicate a paging status of the terminal device.

Optionally, the apparatus further includes:

a fifth determining unit, configured to determine the first paging occasion number according to paging parameters, before determining a first information field corresponding to the terminal device in first downlink control information (DCI) according to a first paging occasion number.

where the paging parameters include at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

Optionally, the first paging occasion number satisfies the following formula:

$$PO\_Index = (SFN\_PF*N*Ns/T+i\_s) \bmod N1;$$

where PO_Index represents the first paging occasion number, SFN_PF represents the SFN of the paging frame corresponding to the paging occasion, N represents the quantity of paging frames in the DRX cycle, and Ns represents the quantity of paging occasions in the paging frame, T represents the length of the DRX cycle, and i_s represents the index of the paging occasion in the paging frame.

Optionally each information field corresponds to one paging occasion, and the first information field includes G1 information bits, and each information bit corresponds to one sub-group.

Optionally the first information field further includes X1 indication bits, the X1 indication bits are configured to indicate relevant information of the paging occasion, and X1 is a positive integer.

Optionally, the apparatus further includes:

a sixth determining unit, configured to determine a start positon of the first information field, according to at least one of the first paging occasion number, the G1 or the X1.

Optionally, the start position of the first information field satisfies the following formula:

$$Location\_start1 = PO\_index*(G1+X1),$$

or,

$$Location\_start1 = PO\_index*(G1+X1)+1;$$

where Location_start1 represents the start position of the first information field, and PO_index represents the first paging occasion number.

Optionally, the first DCI further includes an indication field configured to indicate relevant information of the paging occasion.

Optionally, the relevant information of the paging occasion includes one or more of the following:

an availability of a Tracking Reference Signal (TRS);
whether an Earthquake and Tsunami Warning System (ETWS) sends notification information;
whether to send a system message update indication; or
indication information of a beam of a TRS.

Optionally, the indication field is located subsequent to the N1 information fields.

Optionally, the apparatus further includes:

a seventh determining unit, configured to determine a start positon of the first information field, according to at least one of the first paging occasion number or the G1.

Optionally, the start position of the first information field satisfies the following formula:

$$Location\_start\ 1 = PO\_index*G1,\ or,\ Location\_start1 = PO\_index*G1+1;$$

where Location_start 1 represents the start position of the first information field, and PO_index represents the first paging occasion number.

Optionally, the apparatus further includes:

an eighth determining unit, configured to determine a start position of the indication field based on at least one of the N1 or the G1.

Optionally, the start position of the indication field satisfies the following formula:

$$Location\_start2 = N1*G1,\ or\ Location\_start2 = N1*G1+1;$$

where Location_start2 indicates the start position of the indication field.

Optionally, the indication field is located prior to the N1 information fields.

Optionally, the apparatus further includes:

a ninth determining unit, configured to determine a start position of the first information field based on at least one of the first paging occasion number, the G1 or the X1.

Optionally, the start position of the first information field satisfies the following formula:

$$Location\_start1 = PO\_index*G1+X1;$$

or,

$$Location\_start1= PO\_index*G1+X1+1;$$

where Location_start1 represents the start position of the first information field, and PO_index represents the first paging occasion number..

Optionally, the start position of the indication field is a first bit of the first DCI.

It should be noted here that the above-mentioned device provided by the embodiment of the present disclosure can implement all the method steps implemented by the above-mentioned paging processing method embodiment applied to terminal device, and can achieve the same technical effect. This article will no longer be explained here. The parts and beneficial effects in the embodiments that are the same as those in the method embodiments will be described in detail.

As shown in Fig. 10, an embodiment of the present disclosure also provides a paging processing apparatus, which is applied to network device, including:

a third determining unit 1001, configured to determine a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;

a fourth determining unit 1002, configured to, according to a sub-group number corresponding to the terminal device, determine a first bit corresponding to the terminal device in the first information field, where the first bit is configured to indicate a paging status of the terminal device.

Optionally, the apparatus further includes:

a tenth determining unit, configured to determine the first paging occasion number according to paging parameters, before determining a first information field corresponding to the terminal device in first downlink control information (DCI) according to a first paging occasion number

where the paging parameters include at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

Optionally, the first paging occasion number satisfies the following formula:

$$PO\_Index = (SFN\_PF*N*Ns/T + i\_s) \bmod N1;$$

where PO_Index represents the first paging occasion number, SFN_PF represents the SFN of the paging frame corresponding to the paging occasion, N represents the quantity of paging frames in the DRX cycle, and Ns represents the quantity of paging occasions in the paging frame, T represents the length of the DRX cycle, and i_s represents the index of the paging occasion in the paging frame.

Optionally each information field corresponds to one paging occasion, and the first information field includes G1 information bits, and each information bit corresponds to one sub-group.

Optionally the first information field further includes X1 indication bits, the X1 indication bits are configured to indicate relevant information of the paging occasion, and X1 is a positive integer.

Optionally, the apparatus further includes:

an eleventh determining unit, configured to determine a start positon of the first information field, according to at least one of the first paging occasion number, the G1 or the X1.

Optionally, the start position of the first information field satisfies the following formula:

$$Location\_start1 = PO\_index*(G1+X1),$$

or,

$$Location\_start1 = PO\_index*(G1+X1)+1;$$

where Location_start1 represents the start position of the first information field, and PO_index represents the first paging occasion number.

Optionally, the first DCI further includes an indication field configured to indicate relevant information of the paging occasion.

Optionally, the relevant information of the paging occasion includes one or more of the following:

an availability of a Tracking Reference Signal (TRS);
whether an Earthquake and Tsunami Warning System (ETWS) sends notification information;
whether to send a system message update indication; or
indication information of a beam of a TRS.

Optionally, the indication field is located subsequent to the N1 information fields.

Optionally, the apparatus further includes:

a twelfth determining unit, configured to determine a start positon of the first information field, according to at least one of the first paging occasion number or the G1.

Optionally, the start position of the first information field satisfies the following formula:

$$Location\_start\ 1 = PO\_index*G1, \text{ or, } Location\_start1 = PO\_index*G1+1;$$

where Location_start 1 represents the start position of the first information field, and PO_index represents the first paging occasion number.

Optionally, the apparatus further includes:

a thirteenth determining unit, configured to determine a start position of the indication field based on at least one of the N1 or the G1.

Optionally, the start position of the indication field satisfies the following formula:

$$Location\_start2 = N1*G1, \text{ or } Location\_start2 = N1*G1+1;$$

where Location_start2 indicates the start position of the indication field.

Optionally, the indication field is located prior to the N1 information fields.

Optionally, the apparatus further includes:

a fourteenth determining unit, configured to determine a start position of the first information field based on at least one of the first paging occasion number, the G1 or the X1.

Optionally, the start position of the first information field satisfies the following formula:

$$Location\_start1 = PO\_index*G1+X1;$$

or,

$$Location\_start1 = PO\_index*G1+X1+1;$$

where Location_start1 represents the start position of the first information field, and PO_index represents the first paging occasion number.

Optionally, the start position of the indication field is a first bit of the first DCI.

It should be noted here that the above-mentioned device provided by the embodiment of the present disclosure can implement all the method steps implemented by the above-mentioned paging processing method embodiment applied to network device, and can achieve the same technical effect. This article will no longer be explained here. The parts and beneficial effects in the embodiments that are the same as those in the method embodiments will be described in detail.

It should be noted that the division of units according to the embodiment of the present disclosure is schematic and is only a logical function division. In actual implementation, there may be other division methods. In addition, each functional unit in various embodiments of the present disclosure may be integrated into one processing unit, or each unit may exist physically alone, or two or more units may be integrated into one unit. The above integrated units can be implemented in the form of hardware or software functional units.

If the integrated unit is implemented in the form of a software functional unit and sold or used as an independent product, it may be stored in a processor -readable storage medium. Based on this understanding, the technical solution of the present disclosure is essentially or contributes to the relevant technology, or all or part of the technical solution can be embodied in the form of a software product, and the computer software product is stored in a storage medium, It includes several instructions to cause a computer device (which can be a personal computer, a server, or a network device, etc.) or a processor to execute all or part of the steps of the methods described in various embodiments of the present disclosure. The aforementioned storage media include: U disk, mobile hard disk, read-only memory (ROM), random access memory (RAM), magnetic disk or optical disk and other media that can store program code.

In some embodiments of the present disclosure, a processor-readable storage medium is also provided, the processor-readable storage medium stores program instructions, and the program instructions are used to cause the processor to perform the following steps:

determining a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer;

according to a sub-group number corresponding to the terminal device, determining a first bit corresponding to the terminal device in the first information field, where the first bit is configured to indicate a paging status of the terminal device.

The terminal device in the present disclosure may be a device that provides voice and/or data connectivity to users, a handheld device with a wireless connection function, or other processing devices connected to a wireless modem, etc. In different systems, the names of terminal device may also be different. For example, in a 5G system, the terminal device may be called User Equipment (UE). Wireless terminal device can communicate with one or more core networks (Core Network, CN) via a Radio Access Network (RAN). The wireless terminal device can be a mobile terminal device, such as a mobile phone (also known as a "cell phone") and computers with mobile terminal devices, which may be, for example, portable, pocket-sized, handheld, computer-built-in or vehicle-mounted mobile devices, which exchange speech and/or data with the radio access network. For example, Personal Communication Service (PCS) phones, cordless phones, Session Initiated Protocol (SIP) phones, Wireless Local Loop (WLL) stations, Personal Digital Assistants (PDA) and other equipment. Wireless terminal device may also be called a system, a subscriber unit, a subscriber station, a mobile station, a mobile station, a remote station, or an access point., remote terminal device (remote terminal), access terminal device (access terminal), user terminal device (user terminal), user agent (user agent), user device (user device), are not limited in the embodiments of the present disclosure.

The network device in the present disclosure may be a base station, and the base station may include multiple cells that provide services for terminals. Depending on the specific application, a base station can also be called an access point, or it can be a device in the access network that communicates with wireless terminal device through one or more sectors on the air interface, or it can be named by another name. The network device may be used to exchange received air frames with Internet Protocol (IP) packets and act as a router between the wireless end device and the rest of the access network, which may include the Internet Protocol (IP) communications network. Network devices also coordinate attribute management of the air interface. For example, the network device involved in the embodiments of the present disclosure may be a network device (Base Transceiver Station, BTS) in Global System for Mobile communications (GSM) or Code Division Multiple Access (CDMA).), it can also be a network device (NodeB) in Wide-band Code Division Multiple Access (WCDMA), or it can be an evolutional Node B, eNB or e-NodeB in a Long Term Evolution (Long Term Evolution, LTE) system Type network device (), 5G base station (gNB) in 5G network architecture (next generation system), or Home evolved Node B (HeNB), relay node (relay node), home base station (femto), pico base station (pico), etc., are not limited in the embodiments of the present disclosure. In some network structures, network device may include Centralized Unit (CU) nodes and Distributed Unit (DU) nodes. The centralized unit and distributed unit may also be arranged geographically separately.

Network equipment and terminal device can each use one or more antennas for Multi-Input Multi-Output (MIMO) transmission. MIMO transmission can be Single User MIMO (SU-MIMO or User MIMO (MU-MIMO). Depending on the shape and number of root antenna combinations, MIMO transmission can be 2D-MIMO, 3D-MIMO, FD-MIMO or massive-MIMO, or it can be diversity transmission, precoding transmission or beamforming transmission, etc.

Those skilled in the art will appreciate that embodiments of the present disclosure may be provided as methods, systems, or computer program products. Accordingly, the present disclosure may take the form of an entirely hardware embodiment, an entirely software embodiment, or an embodiment that combines software and hardware aspects. Furthermore, the present disclosure may take the form of a computer program product embodied on one or more computer-usable storage media (including, but not limited to, magnetic disk storage, optical storage, and the like) having computer-usable program code embodied therein.

The present disclosure is described with reference to flowchart illustrations and/or block diagrams of methods, apparatus (systems), and computer program products according to embodiments of the disclosure. It will be understood that each process and/or block in the flowchart illustrations and/or block diagrams, and combinations of processes and/or blocks in the flowchart illustrations and/or block diagrams, can be implemented by computer-executable instructions. These computer-executable instructions may be provided to a processor of a general-purpose computer, special-purpose computer, embedded processor, or other programmable data processing device to produce a machine such that the instructions executed by the processor of the computer or other programmable data processing device produce Means for implementing the functions specified in a process or processes in a flowchart and/or in a block or blocks in a block diagram.

These processor-executable instructions may also be stored in a processor-readable memory that causes a computer or other programmable data processing apparatus to operate in a particular manner, such that the generation of instructions stored in the processor-readable memory includes the manufacture of the instruction means product, the instruction device implements the function specified in one process or multiple processes in the flow chart and/or one block or multiple blocks in the block diagram.

These processor-executable instructions may also be loaded onto a computer or other programmable data processing device, causing a series of operational steps to be performed on the computer or other programmable device to produce computer-implemented processing, thereby causing the computer or other programmable device to The instructions that are executed provide steps for implementing the functions specified in a process or processes of the flowchart diagrams and/or a block or blocks of the block diagrams.

It should be noted that it should be understood that the division of each module above is only a division of logical functions. In actual implementation, it can be fully or partially integrated into a physical entity, or it can also be physically separated. And these modules can all be implemented in the form of software calling through processing components; they can also all be implemented in the form of hardware; some modules can also be implemented in the form of software calling through processing components, and some modules can be implemented in the form of hardware. For example, the determination module can be a separate processing element, or can be integrated into a chip of the above device. In addition, it can also be stored in the memory of the above device in the form of program code, and can be processed by a certain processing element of the above device. Call and execute the functions of the above identified modules. The implementation of other modules is similar. In addition, all or part of these modules can be integrated together or implemented independently. The processing element described here may be an integrated circuit with signal processing capabilities. During the implementation process, each step of the above method or each of the above modules can be completed by instructions in the form of hardware integrated logic circuits or software in the processor element.

For example, each module, unit, sub-unit or sub-module may be one or more integrated circuits configured to implement the above method, such as: one or more Application Specific Integrated Circuits (ASICs), or one or Multiple microprocessors (Digital Signal Processor, DSP), or one or more Field Programmable Gate Array (Field Programmable Gate Array, FPGA), etc. For another example, when one of the above modules is implemented in the form of a processing element scheduler code, the processing element can be a general-purpose processor, such as a central processing unit (Central Processing Unit, CPU) or other processors that can call the program code. For another example, these modules can be integrated together and implemented in the form of a system-on-a-chip (SOC).

"first", "second" in the present disclosure are used to distinguish similar objects and are not necessarily used to describe a specific order or sequence. It is to be understood that the data so used are interchangeable under appropriate circumstances so that the embodiments of the disclosure described herein may be implemented, for example, in sequences other than those illustrated or described herein. In addition, the terms "including" and "having" and any variations thereof are intended to cover non-exclusive inclusions, e.g., a process, method, system, product, or apparatus that encompasses a series of steps or units and need not be limited to those explicitly listed. Those steps or elements may instead include other steps or elements not expressly listed or inherent to the process, method, product or apparatus. In addition, the use of "and/or" in the description and claims indicates at least one of the connected objects, such as A and/or B and/or C, indicating the inclusion of A alone, B alone, C alone, and both A and B. There are 7 situations in which both B and C exist, both A and C exist, and A, B, and C all exist. Similarly, the use of "at least one of A and B" in this specification and in the claims should be understood to mean "A alone, B alone, or both A and B present."

Obviously, those skilled in the art can make various changes and modifications to the present disclosure without departing from the spirit and scope of the disclosure. In this way, if these modifications and variations of the present disclosure fall within the scope of the claims of the present disclosure and equivalent technologies, the present disclosure is also intended to include these modifications and variations.

## Claims

1. A paging processing method, comprising:

   determining, by a terminal device, a first information field corresponding to the terminal device in first downlink control information (DCI), according to a first paging occasion number, wherein the first DCI comprises N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field comprises G1 sub-group, G1 is a positive integer;
   according to a sub-group number corresponding to the terminal device, determining a first bit corresponding to the terminal device in the first information field, wherein the first bit is configured to indicate a paging status of the terminal device.

2. The method according to claim 1, wherein prior to the determining by a terminal device the first information field corresponding to the terminal device in first DCI according to the first paging occasion number, the method further comprises:

   determining the first paging occasion number according to paging parameters;
   wherein the paging parameters comprise at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

3. The method according to claim 2, wherein the first paging occasion number satisfies the following formula:

$$PO\_Index=（SFN\_PF*N*Ns/T+i\_s）\ mod\ N1;$$

wherein PO_Index represents the first paging occasion number, SFN_PF represents the SFN of the paging frame corresponding to the paging occasion, N represents the quantity of paging frames in the DRX cycle, and Ns represents the quantity of paging occasions in the paging frame, T represents the length of the DRX cycle, and i_s represents the index of the paging occasion in the paging frame.

4. The method according to claim 1, wherein each information field corresponds to one paging occasion, and the first information field comprises G1 information bits, and each information bit corresponds to one sub-group.

5. The method according to claim 4, wherein the first information field further comprises X1 indication bits, the X1 indication bits are configured to indicate relevant information of the paging occasion, and X1 is a positive integer.

6. The method according to claim 5, further comprising:
determining a start positon of the first information field, according to at least one of the first paging occasion number, the G1 or the X1.

7. The method according to claim 6, wherein the start position of the first information field satisfies the following formula:

$$Location\_start1=PO\_index*(G1+X1),$$

or,

$$Location\_start1=PO\_index*(G1+X1)+1;$$

wherein Location_start1 represents the start position of the first information field, and PO_index represents the first paging occasion number.

8. The method according to claim 4, wherein the first DCI further comprises an indication field configured to indicate relevant information of the paging occasion.

9. The method according to claim 5 or 8, wherein the relevant information of the paging occasion comprises one or more of the following:

an availability of a Tracking Reference Signal (TRS);
whether an Earthquake and Tsunami Warning System (ETWS) sends notification information;
whether to send a system message update indication; or
indication information of a beam of a TRS.

10. The method according to claim 8, wherein the indication field is located subsequent to the N1 information fields.

11. The method according to claim 4 or 10, further comprising:
determining a start positon of the first information field, according to at least one of the first paging occasion number or the G1.

12. The method according to claim 11, wherein the start position of the first information field satisfies the following formula:

$$Location\_start\ 1=PO\_index*G1,\ or,\ Location\_start1=PO\_index*G1+1;$$

wherein Location_start 1 represents the start position of the first information field, and PO_index represents the first paging occasion number.

**13.** The method according to claim 10, further comprising:
determining a start position of the indication field based on at least one of the N1 or the G1.

**14.** The method according to claim 13, wherein the start position of the indication field satisfies the following formula:

$$Location\_start2 = N1*G1, \text{ or } Location\_start2 = N1*G1+1;$$

wherein Location_start2 indicates the start position of the indication field.

**15.** The method according to claim 8, wherein the indication field is located prior to the N1 information fields.

**16.** The method according to claim 15, further comprising:
determining a start position of the first information field based on at least one of the first paging occasion number, the G1 or the X1.

**17.** The method according to claim 16, wherein the start position of the first information field satisfies the following formula:

$$Location\_start1 = PO\_index*G1+X1;$$

or,

$$Location\_start1= PO\_index*G1+X1+1;$$

wherein Location_start1 represents the start position of the first information field, and PO_index represents the first paging occasion number.

**18.** The method according to claim 15, wherein the start position of the indication field is a first bit of the first DCI.

**19.** A paging processing method, comprising:

determining, by a network device, a first information field corresponding to the terminal device in first downlink control information (DCI), according to a first paging occasion number, wherein the first DCI comprises N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field comprises G1 sub-group, G1 is a positive integer;
according to a sub-group number corresponding to the terminal device, determining, by the network device, a first bit corresponding to the terminal device in the first information field, wherein the first bit is configured to indicate a paging status of the terminal device.

**20.** The method according to claim 19, wherein prior to the determining by the network device the first information field corresponding to the terminal device in first DCI according to the first paging occasion number, the method further comprises:

determining the first paging occasion number according to paging parameters;
wherein the paging parameters comprise at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

**21.** The method according to claim 20, wherein the first paging occasion number satisfies the following formula:

$$PO\_Index= （SFN\_PF*N*Ns/T+i\_s） \mod N1;$$

wherein PO_Index represents the first paging occasion number, SFN_PF represents the SFN of the paging frame corresponding to the paging occasion, N represents the quantity of paging frames in the DRX cycle, and Ns represents the quantity of paging occasions in the paging frame, T represents the length of the DRX cycle, and i_s represents the index of the paging occasion in the paging frame.

22. The method according to claim 19, wherein each information field corresponds to one paging occasion, and the first information field comprises G1 information bits, and each information bit corresponds to one sub-group.

23. The method according to claim 22, wherein the first information field further comprises X1 indication bits, the X1 indication bits are configured to indicate relevant information of the paging occasion, and X1 is a positive integer.

24. The method according to claim 23, further comprising:
determining a start positon of the first information field, according to at least one of the first paging occasion number, the G1 or the X1.

25. The method according to claim 24, wherein the start position of the first information field satisfies the following formula:

$$Location\_start1 = PO\_index*(G1+X1),$$

or,

$$Location\_start1 = PO\_index*(G1+X1)+1;$$

wherein Location_start1 represents the start position of the first information field, and PO_index represents the first paging occasion number.

26. The method according to claim 22, wherein the first DCI further comprises an indication field configured to indicate relevant information of the paging occasion.

27. The method according to claim 23 or 26, wherein the relevant information of the paging occasion comprises one or more of the following:

an availability of a Tracking Reference Signal (TRS);
whether an Earthquake and Tsunami Warning System (ETWS) sends notification information;
whether to send a system message update indication; or
indication information of a beam of a TRS.

28. The method according to claim 26, wherein the indication field is located subsequent to the N1 information fields.

29. The method according to claim 22 or 28, further comprising:
determining a start positon of the first information field, according to at least one of the first paging occasion number or the G1.

30. The method according to claim 29, wherein the start position of the first information field satisfies the following formula:

$$Location\_start\ 1 = PO\_index*G1,\ or,\ Location\_start1 = PO\_index*G1+1;$$

wherein Location_start 1 represents the start position of the first information field, and PO_index represents the first paging occasion number.

31. The method according to claim 28, further comprising:
determining a start position of the indication field based on at least one of the N1 or the G1.

32. The method according to claim 31, wherein the start position of the indication field satisfies the following formula:

$$\text{Location\_start2} = N1*G1, \text{ or Location\_start2} = N1*G1+1;$$

wherein Location_start2 indicates the start position of the indication field.

33. The method according to claim 26, wherein the indication field is located prior to the N1 information fields.

34. The method according to claim 33, further comprising:
determining a start position of the first information field based on at least one of the first paging occasion number, the G1 or the X1.

35. The method according to claim 34, wherein the start position of the first information field satisfies the following formula:

$$\text{Location\_start1} = PO\_index*G1+X1;$$

or,

$$\text{Location\_start1} = PO\_index*G1+X1+1;$$

wherein Location_start1 represents the start position of the first information field, and PO_index represents the first paging occasion number.

36. The method according to claim 33, wherein the start position of the indication field is a first bit of the first DCI.

37. A paging processing apparatus, applied to a terminal device, comprising a storage, a transceiver, and a processor; the storage is configured to store computer programs; the transceiver is configured to send and receive data under a control of the processor; the processor is configured to read the computer program in the memory to perform:

determining a first information field corresponding to the terminal device in first downlink control information (DCI), according to a first paging occasion number, wherein the first DCI comprises N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field comprises G1 sub-group, G1 is a positive integer;
according to a sub-group number corresponding to the terminal device, determining a first bit corresponding to the terminal device in the first information field, wherein the first bit is configured to indicate a paging status of the terminal device.

38. The paging processing apparatus according to claim 37, wherein the processor is further configured to perform:

determining the first paging occasion number according to paging parameters;
wherein the paging parameters comprise at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

39. The paging processing apparatus according to claim 37, wherein each information field corresponds to one paging occasion, and the first information field comprises G1 information bits, and each information bit corresponds to one sub-group.

40. The paging processing apparatus according to claim 39, wherein the first DCI further comprises an indication field configured to indicate relevant information of the paging occasion.

41. The paging processing apparatus according to claim 40, wherein the relevant information of the paging occasion comprises one or more of the following:

an availability of a Tracking Reference Signal (TRS);
whether an Earthquake and Tsunami Warning System (ETWS) sends notification information;
whether to send a system message update indication; or
indication information of a beam of a TRS.

42. The paging processing apparatus according to claim 40, wherein the indication field is located subsequent to the N1 information fields.

43. The paging processing apparatus according to claim 39 or 42, wherein the processor is further configured to perform: determining a start positon of the first information field, according to at least one of the first paging occasion number or the G1.

44. The paging processing apparatus according to claim 43, wherein the start position of the first information field satisfies the following formula:

$$\text{Location\_start } 1 = PO\_index*G1, \text{ or, Location\_start1} = PO\_index*G1+1;$$

wherein Location_start 1 represents the start position of the first information field, and PO_index represents the first paging occasion number.

45. The paging processing apparatus according to claim 42, wherein the processor is further configured to perform: determining a start position of the indication field based on at least one of the N1 or the G1.

46. The paging processing apparatus according to claim 45, wherein the start position of the indication field satisfies the following formula:

$$\text{Location\_start2} = N1*G1, \text{ or Location\_start2} = N1*G1+1;$$

wherein Location_start2 indicates the start position of the indication field.

47. A paging processing apparatus, applied to a network device, comprising a storage, a transceiver, and a processor; the storage is configured to store computer programs; the transceiver is configured to send and receive data under a control of the processor; the processor is configured to read the computer program in the memory to perform:

determining a first information field corresponding to the terminal device in first downlink control information (DCI), according to a first paging occasion number, wherein the first DCI comprises N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field comprises G1 sub-group, G1 is a positive integer;
according to a sub-group number corresponding to the terminal device, determining a first bit corresponding to the terminal device in the first information field, wherein the first bit is configured to indicate a paging status of the terminal device.

48. A paging processing apparatus, applied to a terminal device, comprising:

a first determining unit, configured to determine a first information field corresponding to the terminal device in first downlink control information (DCI), according to a first paging occasion number, wherein the first DCI comprises N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field comprises G1 sub-group, G1 is a positive integer;
a second determining unit, configured to, according to a sub-group number corresponding to the terminal device, determine a first bit corresponding to the terminal device in the first information field, wherein the first bit is configured to indicate a paging status of the terminal device.

**49.** The paging processing apparatus according to claim 48, further comprising:

a fifth determining unit, configured to determine the first paging occasion number according to paging parameters; wherein the paging parameters comprise at least one of a quantity of paging frames in a Discontinuous Reception (DRX) cycle, a quantity of paging occasions in a paging frame, a length of a DRX cycle, an index of a paging occasion in a paging frame, or a system frame number (SFN) of a paging frame corresponding to a paging occasion.

**50.** The paging processing apparatus according to claim 48, wherein each information field corresponds to one paging occasion, and the first information field comprises G1 information bits, and each information bit corresponds to one sub-group.

**51.** The paging processing apparatus according to claim 50, wherein the first DCI further comprises an indication field configured to indicate relevant information of the paging occasion.

**52.** The paging processing apparatus according to claim 51, wherein the relevant information of the paging occasion comprises one or more of the following:

an availability of a Tracking Reference Signal (TRS);
whether an Earthquake and Tsunami Warning System (ETWS) sends notification information;
whether to send a system message update indication; or
indication information of a beam of a TRS.

**53.** The paging processing apparatus according to claim 51, wherein the indication field is located subsequent to the N1 information fields.

**54.** The paging processing apparatus according to claim 50 or 53, further comprising:
a seventh determining unit, configured to determine a start positon of the first information field, according to at least one of the first paging occasion number or the G1.

**55.** The paging processing apparatus according to claim 54, wherein the start position of the first information field satisfies the following formula:

$$Location\_start\ 1 = PO\_index*G1,\ or,\ Location\_start1 = PO\_index*G1+1;$$

wherein Location_start 1 represents the start position of the first information field, and PO_index represents the first paging occasion number.

**56.** The paging processing apparatus according to claim 53, further comprising:
an eighth determining unit, configured to determine a start position of the indication field based on at least one of the N1 or the G1.

**57.** The paging processing apparatus according to claim 56, wherein the start position of the indication field satisfies the following formula:

$$Location\_start2 = N1*G1,\ or\ Location\_start2 = N1*G1+1;$$

wherein Location_start2 indicates the start position of the indication field.

**58.** A paging processing apparatus, applied to network device, comprising:

a third determining unit, configured to determine a first information field corresponding to the terminal device in first downlink control information (DCI), according to a first paging occasion number, wherein the first DCI comprises N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field comprises G1 sub-group, G1 is a positive integer;

a fourth determining unit, configured to, according to a sub-group number corresponding to the terminal device, determine a first bit corresponding to the terminal device in the first information field, wherein the first bit is configured to indicate a paging status of the terminal device.

59. A processor-readable storage medium, wherein the processor-readable storage medium stores program instructions, the program instructions are configured to cause the processor to perform the paging processing method according to any one of claims 1 to 18, or perform the paging processing method according to any one of claims 19 to 36.

11

11

Fig.1

determining, by a terminal device, a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer

201

according to a sub-group number corresponding to the terminal device, determining a first bit corresponding to the terminal device in the first information field, where the first bit is configured to indicate a paging status of the terminal device

202

Fig.2

| Sub-group1 | Sub-group2 | ... | Sub-group1 | Sub-group2 | ... | Sub-group1 | Sub-group2 | ... | Sub-group1 | Sub-group2 | ... |
|---|---|---|---|---|---|---|---|---|---|---|---|

information field 1
PO1: PO_index=0

information field 2
PO2: PO_index=1

information field 3
PO3: PO_index=2

information field 4
PO4: PO_index=3

Fig.3

| Sub-group 1 | Sub-group 2 | ... | Sub-group 1 | Sub-group 2 | ... | Sub-group 1 | Sub-group 2 | ... | Sub-group 1 | Sub-group 2 | ... | Other indication field (Other indication) |
|---|---|---|---|---|---|---|---|---|---|---|---|---|

information field 1
PO1:
PO_index=0

information field 2
PO2:
PO_index=1

information field 3
PO3:
PO_index=2

information field 4
PO4:
PO_index=3

Indication field
(Other indication)

Fig.4

| Other indication field (Other indication) | Sub-group 1 | Sub-group 2 | ... | Sub-group 1 | Sub-group 2 | ... | Sub-group 1 | Sub-group 2 | ... | Sub-group 1 | Sub-group 2 | ... |
|---|---|---|---|---|---|---|---|---|---|---|---|---|

Indication field
(Other indication)

information field 1
PO1:
PO_index=0

information field 2
PO2:
PO_index=1

information field 3
PO3:
PO_index=2

information field 4
PO4:
PO_index=3

Fig.5

determining, by a network device, a first information field corresponding to the terminal device in first downlink control information (DCI), according to a first paging occasion number, where the first DCI includes N1 information fields, and each information field corresponds to one or more paging occasions, the first paging occasion number is a number of paging occasion monitored by the terminal device among paging occasions corresponding to the N1 information fields, N1 is a positive integer, and the paging occasion corresponding to the first information field includes G1 sub-group, G1 is a positive integer

601

according to a sub-group number corresponding to the terminal device, determining, by the network device, a first bit corresponding to the terminal device in the first information field, where the first bit is configured to indicate a paging status of the terminal device

602

Fig.6

Fig.7

Fig.8

Fig.9

Fig.10

## INTERNATIONAL SEARCH REPORT

| International application No. |
|---|
| **PCT/CN2022/109974** |

### A. CLASSIFICATION OF SUBJECT MATTER

H04W 68/00(2009.01)i

According to International Patent Classification (IPC) or to both national classification and IPC

### B. FIELDS SEARCHED

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 寻呼机会, 编号, 索引, 下行控制信息, 信息域, 子组, 寻呼, 情况, 是否, 周期, 长度, 寻呼帧, 个数, 非连续接收, 跟踪参考信号, 地震和海啸预警系统, 指示, 通知, 起始, 位置, paging, opportunity, PO, index, DCI, period, PF, frame, sub-group, TRS, ETWS, location, start, SFN, DRX

### C. DOCUMENTS CONSIDERED TO BE RELEVANT

| Category* | Citation of document, with indication, where appropriate, of the relevant passages | Relevant to claim No. |
|---|---|---|
| PX | CATT. ""Paging enhancement for UE power saving"" <br> *3GPP tsg_ran\wg1_rl1 R1-2109235*, 02 October 2021 (2021-10-02), <br> sections 2-4 | 1-59 |
| X | CN 112752341 A (RESEARCH INSTITUTE OF CHINA MOBILE COMMUNICATIONS CORP. et al.) 04 May 2021 (2021-05-04) <br> description, paragraphs [0117]-[0194] and [0209]-[0294] | 1-59 |
| X | CN 109803355 A (CHINA ACADEMY OF TELECOMMUNICATIONS TECHNOLOGY) 24 May 2019 (2019-05-24) <br> description, paragraphs [0002]-[0116] | 1-59 |
| A | CN 111148128 A (SHARP CORP.) 12 May 2020 (2020-05-12) <br> entire document | 1-59 |
| A | WO 2018045307 A1 (INTEL IP CORP.) 08 March 2018 (2018-03-08) <br> entire document | 1-59 |

☐ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **14 September 2022** | **28 September 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

| International application No. |
| --- |
| **PCT/CN2022/109974** |

| Patent document cited in search report | | | Publication date (day/month/year) | Patent family member(s) | | | Publication date (day/month/year) |
| --- | --- | --- | --- | --- | --- | --- | --- |
| CN | 112752341 | A | 04 May 2021 | WO | 2021082892 | A1 | 06 May 2021 |
| CN | 109803355 | A | 24 May 2019 | CN | 109803355 | B | 30 March 2021 |
| CN | 111148128 | A | 12 May 2020 | WO | 2020088514 | A1 | 07 May 2020 |
| WO | 2018045307 | A1 | 08 March 2018 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202110901354